# EUROPEAN PATENT SPECIFICATION

(11) **EP 2 922 747 B1**
(45) Date of publication and mention of the grant of the patent: **14.06.2017**
(21) Application number: 13801895.7
(22) Date of filing: 19.11.2013
(51) Int. Cl.: B63B 35/79, F16G 11/04, F16G 11/10

(54) **A CLAMPING DEVICE FOR HOLDING AND PULLING IN A LINE, SUCH AS A SHEET**
KLEMMVORRICHTUNG ZUM FESTHALTEN UND ZIEHEN EINES SEILS, INSBESONDERE EINER SCHOT
DISPOSITIF DE POIGNET AUTO-BLOQUANTE POUR TENIR ET TIRER UNE CORDE, EN PARTICULIER UNE ÉCOUTE

(30) Priority: 20.11.2012 NL 2009843
(43) Date of publication of application: 30.09.2015
(73) Proprietor: Kroon, Josephus Arnoldus Renatus, 1506 ET Zaandam (NL)
(72) Inventor: Kroon, Josephus Arnoldus Renatus, 1506 ET Zaandam (NL)
(74) Representative: Vernout, Robert
(86) International application number: PCT/NL2013/050830
(87) International publication number: WO 2014/081289

(56) References cited:
- EP-A1- 2 216 075
- FR-A1- 2 405 073
- FR-A1- 2 972 936
- US-A1- 2009 249 586

## Description

The present invention relates to a clamping device for holding and pulling in a line, such as a sheet. Such a clamping device is described in US patent publication US 2009/0249586 or in FR 2972936 A1.

Such a clamping device is intended for manually holding a line, in particular a sheet, without exerting a great deal of gripping force and constricting one' hand or injuring it as a result of the line slipping through. The object of the invention is to provide a clamping device which makes it possible to clamp a line and unclamp and/or pay out the line in a simple, quick and/or reliable manner, using one hand.

In order to achieve that object, the clamping device according to the invention comprises a handle part and a finger engaging part, which parts are hinged together about a hinge axis, the handle part and the finger engaging part each having a line engaging surface which extends spaced from the hinge axis and which faces toward the hinge axis, such that a line can be placed between the two line engaging surfaces at the location of the hinge axis, perpendicular thereto, and be clamped between the two line engaging surfaces by pivoting the handle part and the index finger engaging part relative to each other between a neutral position, in which the line is not being clamped, and a clamping position, in which the line is being clamped. The clamping device can thus be easily held by engaging the handle part, preferably with the middle finger, the ring finger and the little finger, and be operated in a simple manner by rotating it relative to the finger engaging part by engaging the finger engaging part, preferably with the index finger. It is also possible to use the thumb for operating the finger engaging part.

The hinge preferably extends on one side of the line engaging surfaces, such that the line can be placed against the hinge between the two line engaging surfaces on the hinge axis. An advantage of the device according to the invention is that the line can be easily and quickly placed in the clamp and be removed therefrom without having to open the clamp.

The hinge preferably comprises two substantially flat plates, one being connected to the handle part and one being connected to the finger engaging part, which plates are rotatably mounted on and against each other on the hinge axis.

The line engaging surfaces are preferably provided with clamping ribs that extend substantially parallel to the hinge axis. In this way a strong clamping force is exerted on the line.

The clamping ribs on the line engaging surfaces preferably slope slightly toward the hinge axis, seen in the direction of the hinge. As a result, the line is pushed in the direction of the hinge by the pulling force exerted by the clamp, so that the line is prevented from slipping out of the clamp on the opposite side.

The line engaging surfaces preferably extend slightly away from the hinge axis, seen in the direction of the hinge. This, too, prevents the line from slipping out of the clamp, because the line engaging surfaces push the line against the hinge at an angle thereto.

Each line engaging surface preferably extends substantially symmetrically on either side of the hinge axis. The device as a whole is preferably substantially symmetric relative to a plane perpendicular to the line engaging surfaces through the hinge axis. The clamping device is thus suitable both for left-handed and for right-handed persons. The handle part and/or the finger engaging part is/are preferably provided with hollow recesses on the outer side for partially accommodating the inner side of a user's fingers. This prevents the clamping device slipping from a user's hand. The surface is preferably provided with gripping means, for example small ribs.

The finger engaging part is preferably provided with a through hole which extends between the line engaging surface opposite the hinge axis and the opposite end of the finger engaging part, wherein a push button provided with a spring is mounted in the through hole, the spring being extended in a position of rest, with the push button projecting from the aforesaid opposite end of the finger engaging part, and being depressed in a depressed condition, with the push button projecting so far from the opening near the hinge axis that the end of the push button can push a line against the line engaging surface of the handle part. The line engaging surface of the handle part is preferably provided with a pressure surface at the end of the push button, against which pressure surface the line can be pushed by the push button. The push button preferably comprises an engaging projection, on which a pressure can be exerted with a thumb, and a pin, which can push against the line. The end of the push button near the hinge axis and the pressure surface of the line engaging part are preferably substantially convex, part-cylindrical, with the axis of the convex, part-cylindrical surface extending parallel to the hinge axis. By pushing the push button against the line and moving the finger engaging part from the clamping position to the neutral position, the clamping position is released but the user retains control over the paying out or not paying out of the line, or he can let go the line in one movement, as desired.

The invention will now be explained in more detail with reference to an embodiment shown in the drawings, in which:
Figure 1 is a perspective view and a larger-scale detail view of a clamping device according to the invention;
Figure 2 is a partial longitudinal sectional view of the clamping device of figure 1; and
Figures 3-6 are top plan views in various operational positions of the clamping device of figure 1.

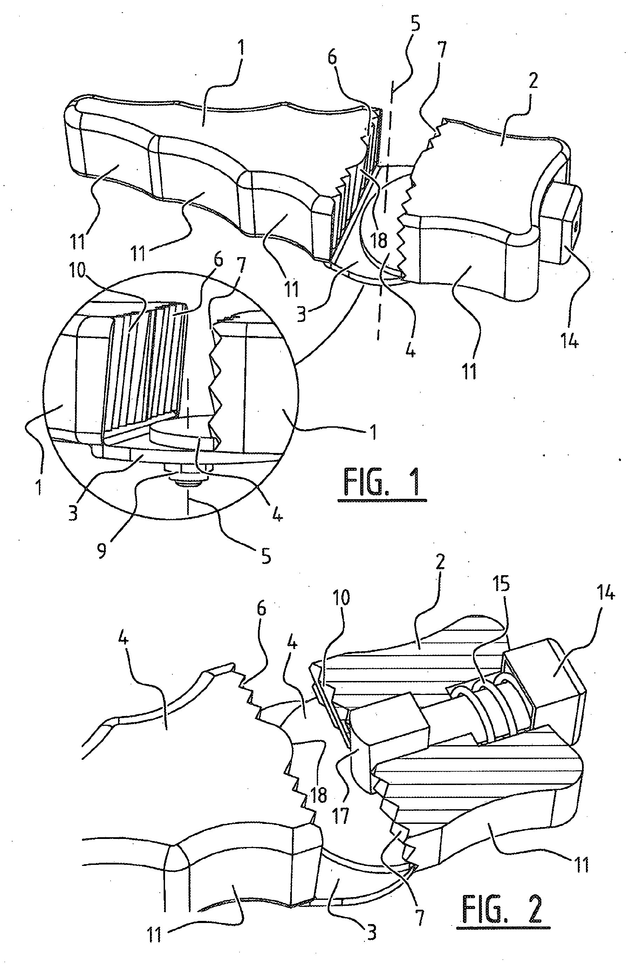

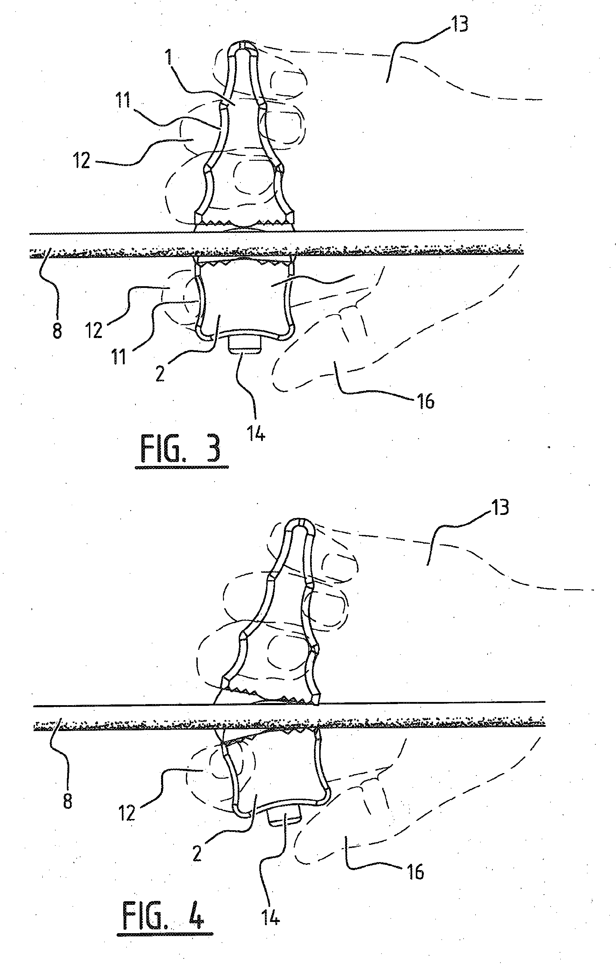

According to figure 1, a clamping device comprises a handle part 1 and a finger engaging part 2. At its bottom side, the handle part 1 is provided with a projecting hinge part 3, in this case a semicircular hinge plate, which extends in the bottom plane, and the finger engaging part is likewise provided at the bottom side thereof with a projecting hinge part 4, in this case a semicircular pivot plate, which extends in the bottom plane. The two hinge parts 3, 4 are hinged together at a position spaced from the handle part 1 and the finger engaging part 2 by means of a pop rivet or a bolt/nut connection 9, with the hinge axis 5 extending through the axis of the nut and the bolt in the space between the handle part 1 and the finger engaging part 2. The surface 6 of the handle part 1 and the surface 7 of the finger engaging part 2, which face the axis 5, form line engaging surfaces between which a line 8 can be placed (see figures 3-6).

The line engaging surfaces 6, 7 are provided with clamping ribs 10, which extend substantially parallel to the hinge axis 5 but which, seen in the direction of the hinge parts 3, 4, slope slightly in the direction of the hinge axis 5, toward the corners of the line engaging surfaces 6, 7. The line engaging surfaces 6, 7 slope slightly away from the hinge axis 5, seen in the direction of the hinge parts 3, 4. This helps to prevent the line 8 from slipping easily out of the clamp.

The handle part 1 and the finger engaging part 2 are provided with hollow recesses 11 at the outer side for partially accommodating the inner side of fingers 12, so that the clamp will not easily slip from the hand 13.

The finger engaging part 2 is provided with a through hole, which extends between the line engaging surface 7 opposite the hinge axis 5 and the opposite end of the finger engaging part 2. In the hole, a push button 14 provided with a spring 15 is accommodated. The end of the push button 14 is provided with convex, part-cylindrical, slightly rough, pressure surface 17.

In the extended condition of the spring 15, the push button 14 projects from the end of the finger engaging part. When the spring 15 is depressed, the other end of the push button 14 pushes the line 8 against a likewise convex, part-cylindrical, slightly rough pressure surface 18 in the opposite line engaging surface 6, as a result of which a clamping force can be realised that can be controlled by the pressure force.

According to figures 3, a line 8 can be placed in the space between the handle part 1 and the finger engaging part 2 when a user holds the two parts in the neutral position, using his thumb 16 and index finger 12, in which position the two parts are in line. When subsequently the operator pivots the finger engaging part toward him, using his thumb 16 and index finger 12, and pulls the clamp 1, 2 as a whole toward him over the tensioned line 8 with the four fingers 12 as shown in figure 4, the line 8 is automatically clamped in the clamp 1, 2. The line 8 can be taken out of the clamp by doing the reverse.

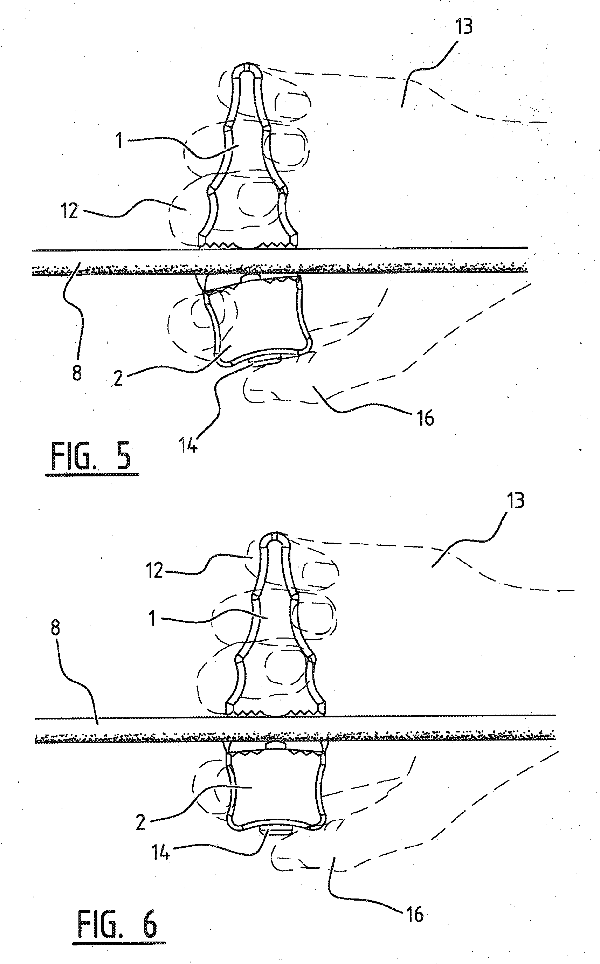

As shown in figures 5 and 6, the button 14 can be depressed with the thumb 16 to ensure that the line 8 will not slip out suddenly but can be held or be paid out in a controlled manner.

The invention has thus been described by means of a preferred embodiment. It should be understood, however, that the above description is essentially illustrative. Various details of the structure and function have been presented, but modifications that can be made thereto, and which are fully extended by the general meaning of the terminology in which the appended claims are expressed, are to be understood to fall within the principle of the present invention. The description and the drawings are to be used to interpret the claims. The claims must not be interpreted in such a way that the scope of the protection sought is to be understood as being defined by the strict, literal meaning of the wording of the claims, with the description and the drawings only being used to solve any ambiguity found in the claims. To determine the scope of the protection sought through the claims, each element that is equivalent to an element specified therein is to be taken into suitable consideration.

## Claims

1. A clamping device for holding and pulling in a line, such as a sheet, comprising a handle part (1) and a finger engaging part (2), which parts are hinged together about a hinge axis (5), the handle part (1) and the finger engaging part (2) each having a line engaging surface (6,7) which extends spaced from the hinge axis (5) and which faces toward the hinge axis, such that a line can be placed between the two line engaging surfaces (6,7) at the location of the hinge axis (5), perpendicular thereto, and be clamped between the two line engaging surfaces (6,7) by pivoting the handle part (1) and the index finger engaging part (2) relative to each other.

2. A clamping device according to claim 1, wherein the hinge extends on one side of the line engaging surfaces, such that the line can be placed against the hinge between the two line engaging surfaces on the hinge axis.

3. A clamping device according to claim 1 or 2, wherein the hinge comprises two substantially flat plates, one being connected to the handle part and one being connected to the finger engaging part, which plates are rotatably mounted on an against each other on the hinge axis.

4. A clamping device according to claim 1, 2 or 3, wherein the line engaging surfaces are provided with clamping ribs that extend substantially parallel to the hinge axis.

5. A clamping device according to claim 4, wherein the clamping ribs on the line engaging surfaces slope slightly toward the hinge axis, seen in the direction of the hinge.

6. A clamping device according to any one of the preceding claims, wherein the line engaging surfaces extend slightly away from the hinge axis, seen in the direction of the hinge.

7. A clamping device according to any one of the preceding claims, wherein each line engaging surface extends substantially symmetrically on either side of the hinge axis.

8. A clamping device according to any one of the preceding claims, wherein the device is substantially symmetric relative to a plane perpendicular to the line engaging surfaces through the hinge axis.

9. A clamping device according to any one of the preceding claims, wherein the handle part and/or the finger engaging part is/are provided with hollow recesses on the outer side for partially accommodating the inner side of a user's fingers.

10. A clamping device according to any one of the preceding claims, wherein the finger engaging part is provided with a through hole which extends between the line engaging surface opposite the hinge axis and the opposite end of the finger engaging part, wherein a push button provided with a spring is mounted in the through hole, the spring being extended in a position of rest, with the push button projecting from the aforesaid opposite end of the finger engaging part, and being depressed in a depressed condition, with the push button projecting so far from the opening near the hinge axis that the end of the push button can push a line against the line engaging surface of the handle part.

11. A clamping device according to claim 10, wherein the line engaging surface of the handle part is provided with a pressure surface at the end of the push button, against which pressure surface the line can be pushed by the push button.

12. A clamping device according to claim 10 or 11, wherein the end of the push button near the hinge axis and the pressure surface of the line engaging part are substantially convex, part-cylindrical, with the axis of the convex, part-cylindrical surface extending parallel to the hinge axis.

## Patentansprüche

1. Klemmvorrichtung zum Festhalten und Ziehen eines Seils, insbesondere einer Schot, die einen Griffteil (1) und einen Fingerangriffsteil (2) umfasst, wobei die Teile über eine Gelenkachse (5) gelenkig miteinander verbunden sind, wobei der Griffteil (1) und der Fingerangriffsteil (2) jeweils eine Seil-Angriffsfläche (6, 7) aufweisen, die sich beabstandet von der Gelenkachse (5) erstreckt und die der Gelenkachse zugewandt ist, so dass ein Seil zwischen den beiden Seil-Angriffsflächen (6, 7) an der Stelle der Gelenkachse (5), senkrecht dazu, platzierbar und zwischen den beiden Seil-Angriffsflächen (6, 7) durch Schwenken des Griffteils (1) und des Zeigefingerangriffsteils (2) relativ zueinander, einklemmbar ist.

2. Klemmvorrichtung nach Anspruch 1, wobei sich das Gelenk auf einer Seite der Seil-Angriffsflächen erstreckt, so dass das Seil gegen das Gelenk zwischen den beiden Seil-Angriffsflächen an der Gelenkachse platzierbar ist.

3. Klemmvorrichtung nach Anspruch 1 oder 2, wobei das Gelenk zwei im Wesentlichen flache Platten aufweist, von denen eine mit dem Griffteil verbunden ist und eine mit dem Fingerangriffsteil verbunden ist, wobei die Platten aneinander und gegeneinander drehbar an der Gelenkachse angebracht sind.

4. Klemmvorrichtung nach Anspruch 1, 2 oder 3, wobei die Seil-Angriffsflächen mit Klemmrippen ausgestattet sind, die sich im Wesentlichen parallel zur Gelenkachse erstrecken.

5. Klemmvorrichtung nach Anspruch 4, wobei sich die Klemmrippen an den Seil-Angriffsflächen, betrachtet in der Richtung des Gelenks, leicht zu der Gelenkachse hin neigen.

6. Klemmvorrichtung nach einem der vorstehenden Ansprüche, wobei sich die Seil-Angriffsflächen, betrachtet in der Richtung des Gelenks, leicht von der Gelenkachse weg erstrecken.

7. Klemmvorrichtung nach einem der vorstehenden Ansprüche, wobei sich jede Seil-Angriffsfläche im Wesentlichen symmetrisch auf beiden Seiten der Gelenkachse erstreckt.

8. Klemmvorrichtung nach einem der vorstehenden Ansprüche, wobei die Vorrichtung im Wesentlichen relativ zu einer Ebene senkrecht zu den Seil-Angriffsflächen durch die Gelenkachse symmetrisch ist.

9. Klemmvorrichtung nach einem der vorstehenden Ansprüche, wobei der Griffteil und/oder der Fingerangriffsteil an der Außenseite mit hohlen Ausnehmungen ausgestattet sind/ist, um die Innenseite der Finger eines Benutzers teilweise aufzunehmen.

10. Klemmvorrichtung nach einem der vorstehenden Ansprüche, wobei der Fingerangriffsteil mit einem Durchgangsloch ausgestattet ist, das sich zwischen der Seil-Angriffsfläche gegenüber der Gelenkachse und dem gegenüberliegenden Ende des Fingerangriffsteils erstreckt, wobei ein mit einer Feder ausgestatteter Druckknopf in dem Durchgangsloch montiert ist, wobei die Feder in einer Ruheposition ausgedehnt ist, wobei der Druckknopf von dem zuvor genannten gegenüberliegenden Ende des Fingerangriffsteils vorsteht, und in einen gedrückten Zustand gedrückt ist, wobei der Druckknopf so weit von der Öffnung nahe der Gelenkachse vorsteht, dass das Ende des Druckknopfes ein Seil gegen die Seil-Angriffsfläche des Griffteils zu drücken vermag.

11. Klemmvorrichtung nach Anspruch 10, wobei die Seil-Angriffsfläche des Griffteils am Ende des Druckknopfes mit einer Druckfläche ausgestattet ist, die gegen das Seil durch den Druckknopf gedrückt werden kann.

12. Klemmvorrichtung nach Anspruch 10 oder 11, wobei das Ende des Druckknopfes nahe der Gelenkachse und die Druckfläche des Seil-Angriffsteils im Wesentlichen konvex, teil-zylindrisch sind, wobei sich die Achse der konvexen, teilzylindrischen Fläche parallel zur Gelenkachse erstreckt.

## Revendications

1. Dispositif de blocage destiné à maintenir et à entraîner une partie en ligne, telle qu'une feuille, comprenant une partie de poignée (1) et une partie de couplage de doigt (2) lesquelles parties sont articulées entre elles autour d'un axe d'articulation (5) la partie de poignée (1) et la partie de couplage de doigt (2) comportant chacune une surface de couplage de ligne (6, 7) qui s'étend de manière espacée par rapport à l'axe d'articulation (5) et qui fait face à l'axe d'articulation, de telle sorte qu'une ligne peut être placée entre deux surfaces de couplage de ligne (6, 7) au niveau de l'emplacement de l'axe d'articulation (5) perpendiculairement à celui-ci, et peut être bloquée entre les deux surfaces de couplage de ligne (6, 7) en faisant pivoter la partie de poignée (1) et la partie de couplage d'index (2) l'une par rapport à l'autre.

2. Dispositif de blocage selon la revendication 1, dans lequel l'articulation s'étend sur un côté des surfaces de couplage de ligne, de telle sorte que la ligne peut être placée contre l'articulation entre les deux surfaces de couplage de ligne sur l'axe d'articulation.

3. Dispositif de blocage selon la revendication 1 ou 2, dans lequel l'articulation comprend deux plaques sensiblement plates, une étant reliée à la partie de poignée et une étant reliée à la partie de couplage de doigt, lesquelles plaques sont montées de manière à pouvoir tourner l'une contre l'autre sur l'axe d'articulation.

4. Dispositif de blocage selon la revendication 1, 2 ou 3, dans lequel les surfaces de couplage de ligne sont équipées de nervures de blocage qui s'étendent sensiblement parallèlement à l'axe d'articulation.

5. Dispositif de blocage selon la revendication 4, dans lequel les nervures de blocage sur les surfaces de couplage de ligne sont légèrement inclinées vers l'axe d'articulation, vues dans la direction de l'articulation.

6. Dispositif de blocage selon l'une quelconque des revendications précédentes, dans lequel les surfaces de couplage de ligne s'étendent légèrement à l'écart de l'axe d'articulation, vues dans la direction de l'articulation.

7. Dispositif de blocage selon l'une quelconque des revendications précédentes, dans lequel chaque surface de couplage de ligne s'étend de manière sensiblement symétrique de chaque côté de l'axe d'articulation.

8. Dispositif de blocage selon l'une quelconque des revendications précédentes, dans lequel le dispositif est sensiblement symétrique par rapport à un plan perpendiculaire aux surfaces de couplage de ligne à travers l'axe d'articulation.

9. Dispositif de blocage selon l'une quelconque des revendications précédentes, dans lequel la partie de poignée et/ou la partie de couplage de doigt sont pourvues de cavités creuses sur le côté externe afin de recevoir partiellement le côté interne des doigts d'un utilisateur.

10. Dispositif de blocage selon l'une quelconque des revendications précédentes, dans lequel la partie de couplage de doigt comporte un orifice traversant qui s'étend entre la surface de couplage de ligne opposée à l'axe d'articulation et l'extrémité opposée de la partie de couplage de doigt, dans lequel un bouton poussoir équipé d'un ressort est monté dans l'orifice traversant, le ressort s'étendant dans une position de repos, le bouton poussoir s'étendant à partir de ladite extrémité opposée de la partie de couplage de doigt, et étant appliqué dans un état poussé, le bouton poussoir dépassant de l'ouverture proche de l'axe d'articulation, si bien que l'extrémité du bouton poussoir peut pousser une ligne contre la surface de couplage de ligne de la partie de poignée.

11. Dispositif de blocage selon la revendication 10, dans lequel la surface de couplage de ligne de la partie de poignée est équipée d'une surface de pression au niveau de l'extrémité du bouton poussoir, contre laquelle surface de pression la ligne peut être poussée par le bouton poussoir.

12. Dispositif de blocage selon la revendication 10 ou 11, dans lequel l'extrémité du bouton poussoir à proximité de l'axe d'articulation et la surface de pression de la partie de couplage de ligne sont sensiblement convexes, partiellement cylindriques, l'axe de la surface partiellement cylindrique convexe s'étendant parallèlement à l'axe d'articulation.
